# EUROPEAN PATENT SPECIFICATION

(11) **EP 3 948 165 B1**
(45) Date of publication and mention of the grant of the patent: **01.05.2024**
(21) Application number: 20721821.5
(22) Date of filing: 24.03.2020
(51) Int. Cl.: G01D 1/00, G01D 11/28, B60K 35/00, B60K 37/00, G01C 21/36, G01D 21/00, H04W 12/04, H04W 84/20

(54) **SMART CONNECT INSTRUMENT CLUSTER**
KOMBIINSTRUMENT MIT INTELLIGENTER VERBINDUNG
GROUPEMENT D'INSTRUMENTS À CONNEXION INTELLIGENTE

(30) Priority: 27.03.2019 IN 201941012093
(43) Date of publication of application: 09.02.2022
(73) Proprietor: TVS Motor Company Limited, Chennai 600006 (IN)
(72) Inventor: SARMADH AMEER, Shafi, Chennai 600 006 (IN); SELVARAJAN, Balaganesh, Chennai 600 006 (IN)
(74) Representative: Patentanwaltskanzlei Matschnig & Forsthuber OG
(86) International application number: PCT/IN2020/050279
(87) International publication number: WO 2020/194349

(56) References cited:
- WO-A1-2017/087872
- GB-A- 2 562 738
- KR-A- 20180 067 836
- US-A1- 2017 334 500

## Description

### TECHNICAL FIELD

The present subject matter generally relates to a vehicle. More particularly but not exclusively the present subject matter relates to an instrument cluster for said vehicle.

### BACKGROUND

Instrument clusters are a series of gauge and indicators that are grouped together in a shell or case in a unified form. Instrument clusters are often used with vehicles or other machinery to convey information to a rider or the operator of that machinery. For example, instrument clusters are often used to display vehicle speed, engine temperature, fuel level, engine oil level, etc.

Traditional instrument cluster which are of analog type often include multiple pointer needles, which are movable in circular direction to point at different portions of a meter or the gauge in order to convey information to the rider or to the operator of the machine having instrument cluster. The pointer needles are often illuminated or the background light of the instrument cluster gets illuminated when the head lights are activated, in order to enhance the visibility at low luminescence time of the day.

Instrument clusters are mainly housed in between the steering handle of the vehicle or upstream of the steering wheel so that it is convenient for the vehicle rider to see the data reflected on the instrument cluster from time to time.

Modern day automobiles have digital instrument cluster display which apart from the basic details as mentioned above, also shows variety of information and are added with more complex feature gauges and tell-tales such as turn indicators, gearshift position, low oil pressure, low tire pressure, light controls, automotive navigations system etc.
US 2017/334500 A1 discloses systems and methods to present information to recreational vehicle riders and to provide customizable visual information to recreational vehicle riders.
KR 2018 0067839 A relates to a device for fixing a temperature detection element for a motor.
GB 2 562 738 A discloses a digital cluster controller for a vehicle, the controller comprising an input arranged to receive sensor data from one or more vehicle sensors indicative of one or more vehicle factors.
WO 2017/087872 A1 discloses systems and methods for operating a display actuator to provide user-configurable actions.

### BRIEF DESCRIPTION OF THE DRAWINGS

Figure 1 illustrates a side view of the exemplary two-wheeled vehicle, in accordance with an embodiment of the present subject matter.
Figure 2 illustrates a top view of the instrument cluster.
Figure 3 illustrates architecture of the instrument cluster.
Figure 4 illustrates master-slave process when the master microcontroller is the master.
Figure 5 illustrates master-slave process when the communication device is the master.

### DETAILED DESCRIPTION

Automobile manufacturers have experimented with various kinds of displays in the instrument cluster which not only has the functional aspect of displaying the information to the rider but also have features which appeals the customer's eyes and gives great viewing experience. With inclusion of new technology, it has also become important to integrate one technology with another.

As the technologies are evolving with time, state of the art vehicles includes various other drive features in order to provide several information in one display and the information to be displayed can be chosen by the user by allowing addition or removal of the type of information to be displayed on the digital screen. The instrument cluster should be able to give information beyond the conventional vehicle parameters that are displayed. Latest technologies have gone beyond providing features which are essential to operate the vehicle properly. Several technologies are added to attract the customer and integrating all the added technologies to provide quality product. Other than getting plethora of options that can be viewed on the instrument cluster, people these days are more connected than ever before. So, integrating the present instrument cluster with the communication system can be more useful to the rider. Riders tend to take phone call during riding a vehicle which can be fatal and cause accidents. So, to avoid such situations and distractions, the vehicle needs to be equipped with features which can itself work as a holistic device for both commuting as well as communication. Also, in order to find a new destination, the rider generally uses the smart phone for identifying current location or stops at several points to ask any person for the routes which causes great inconveniences to the rider. Often the instrument cluster known in the art is configured with a primary controller / ECU which controls all major functions of the vehicle & its parameters e.g. powertrain control, traction control, illumination control, battery control etc. However, to control the instrument cluster, a dedicated microcontroller / ECU system is implemented which communicates independently with either the primary ECU or with any other external system like a phone device or the like. Such configuration leads to increased cost & also complex set-up in terms of the control method. An additional challenge is the pairing of an external device like a mobile phone or the like with the vehicle which is complicated. There is a need to be able to detect & effectively confirm the external device e.g. mobile phone with the instrument cluster & once the detection is completed, to be able to allow the external device to take charge of the system & perform predetermined or user given commands & execute the same on the instrument cluster. There is a potential risk of unauthorized access to the vehicle in the solutions known in the art which permit the external device to take control of the controller of the vehicle & the vehicle itself as a whole. Alternatively, one may have to compromise in permitted one-way control by the cluster rendering the external device with no functionality to perform a controlling function by executing system commands on the vehicle & its controller system.

Hence, the present subject matter provides an instrument cluster which enables the rider to integrate a communication device in order to receive various notifications and alerts on the display screen of the instrument cluster.

Another embodiment of the present subject matter provides an instrument cluster which can be connected to the communication device using a wireless mode like Bluetooth^{®} or the like.

Another embodiment of the present subject matter provides a customized application which stores the last parked location of the vehicle or the last location of the vehicle just before the ignition of the vehicle is switched OFF allowing the user to find the vehicle in a parking lot or in a crowded place for ease in locating the vehicle. The present invention is defined by independent apparatus claim 1 and independent method claim 8.

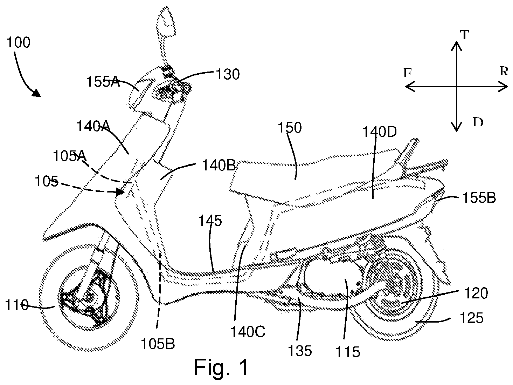

**Fig.** 1 illustrates a left side view of an exemplary motor vehicle (100), in accordance with an embodiment of the present subject matter. The vehicle (100) illustrated, has a frame member (105). In the present embodiment, the frame member (105) is step-through type including a head tube (105A), and a main frame (105B) that extend rearwardly downward from an anterior portion of the head tube (105A). The main frame (105B) extends inclinedly rearward to a rear portion of the vehicle (100).

The vehicle (100) includes one or more prime movers that are connected to the frame member (105). In the present implementation, one of the prime movers is an internal combustion (IC) engine (115) mounted to the frame member (105). In the depicted embodiment, the IC engine (115) is mounted to a structural member (135) that is pivoted to the frame member (105). In one embodiment, the structural member (135) is a rigid member made including metal. The vehicle (100) also includes another prime mover, which is an electric motor (120). In a preferred embodiment, the electric motor (120) is hub mounted to one wheel of the vehicle (100). In another embodiment, more than one electric motor is mounted to wheels of the vehicle. In the depicted embodiment, the vehicle (100) includes at least two-wheels and the electric motor (120) is hub mounted to the rear wheel (125) of the vehicle. A front wheel (110) is rotatably supported by the frame member (105) and is connected to a handle bar assembly (130) that enables maneuvering of the vehicle (100).

Further, the vehicle (100) includes a high capacity on-board battery (not shown) that drives the electric motor (120). The high capacity battery may include one or more high capacity battery packs or one or more low capacity cells. The high capacity battery can be disposed at a front portion, a rear portion, or at the center of the vehicle (100). The high capacity battery is supported by the frame member (105) and the vehicle (100) includes plurality of body panels, mounted to the frame member (105) for covering various components of the vehicle (100). The plurality of panels includes a front panel (140A), a leg shield (140B), an under-seat cover (140C), and a left and a right-side panel (140D). A glove box may be mounted to a leg shield (140B).

A floorboard (145) is provided at the step-through portion defined by the main tube (105B). A seat assembly (150) is disposed rearward to the step-through portion and is mounted to the main frame (105B). The seat assembly (150) that is elongated in a longitudinal direction F-R of the vehicle (100) enables the user to operate the vehicle in a saddle ride-type posture. One or more suspension(s) connect the wheels (110), (125) to the vehicle (100) and provide a comfortable ride. The vehicle (100) comprises of plurality of electrical and electronic components including a headlight (155A), a taillight (155B), a starter motor (not shown), a horn etc. Also, the vehicle (100) includes a master control unit (not shown) that takes control of the overall operation of the vehicle (100) including the function of the IC engine (115), the electric motor (120), charging of the batteries from a magneto/integrated starter generator (ISG), driving of loads by the magneto/ISG, charging of the high capacity batteries by the electric motor operating in generator mode, and any other operations associated with the operation of the vehicle (100). The vehicle (100) shown in fig. 1 is an exemplary vehicle and the present subject matter can be used in a two-wheeled vehicle, three-wheeled vehicle or a four-wheeled vehicle.

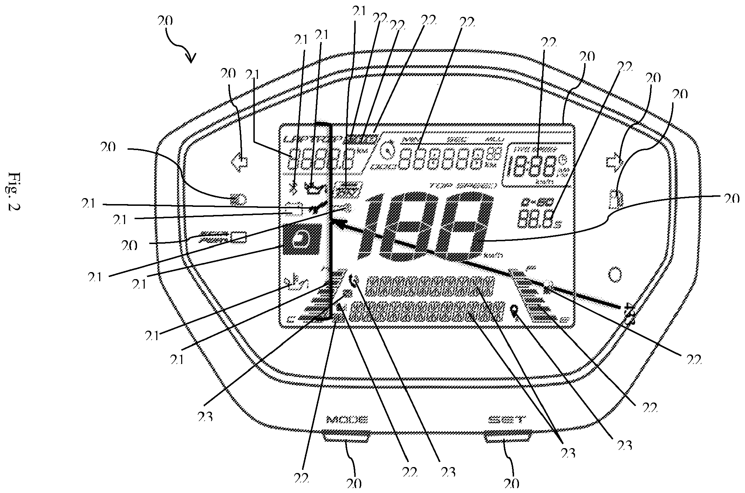

In **Fig. 2****,** the connected instrument cluster (200) comprises a liquid crystal display (LCD) screen (201) for displaying plurality of vehicle parameters like the vehicle status, mobile (communication device) status and navigation instructions etc. Tell-tale indicators such as turn-signal indications (202 and 203), high beam indication (204), driving mode indication (205) and low fuel warning indication (206) are provided on either sides of the display screen (201). Mode and Set button switches (207) and (208) respectively are provided at the bottom edges to allow a rider to change the display mode and set parameters such as clock time and reset parameters such as trip distance. The display screen (201) and tell-tale indicators are protected from external environment by means of a transparent lens (not shown). The display screen (201) is of segmented type and has alphanumeric display segments and graphic icon segments for displaying vehicle status, mobile communication device (433) status and navigation instructions. At the centre of the display screen (201) is a vehicle speed indication (209) in large font so that it is clearly visible to the rider even in bad weather conditions and bright daylight conditions. The vehicle speed indication (209) unit can be set as "kmph" (kilo meter per hour) and "mph" (meter per hour) using the mode button (207) and set button (208).

In the bottom left of the display screen (201), engine oil temperature indication (210) is provided in bar type display. An engine oil temperature icon (211) is also provided to help the user to identify the type of indication. The engine oil temperature indication (210) is useful for the rider and service technician to understand the engine oil temperature. Cold or hot engine conditions can be easily understood and engine oil temperature sensor malfunction can also be understood. The rider may want to perform kick starting if the engine oil temperature is cold. The service technician can also use the engine oil temperature indication to diagnose engine problems such as knocking, jerk, abnormal noise, etc. The engine oil temperature icon (211) blinks if engine oil temperature sensor malfunction is detected.

A "wear helmet" indication (212) is provided on the left-top side of the engine oil temperature indication (210). The "wear helmet" indication (212) blinks during the self-check process and when the instrument cluster starts operating to remind the rider to wear a helmet before starting a ride. A 'Low battery' indication (213) to indicate that the battery is low, "service reminder" indication (214) and "immobilizer ON" indication (215) are provided above the "wear helmet" indication (212). The "low battery" indication (213) blinks if low battery State of Charge (SOC) is detected. The "service reminder" indication (214) blinks if service due is detected. "Immobilizer ON" indication (215) blinks if engine operation is disabled to enhance vehicle security. A "side stand ON" indication (216) blinks if a vehicle side stand is in a deployed condition. This alerts the rider to retract the side stand before commencing the ride. A "low engine oil level" indication (217) blinks if engine oil level detected is low. A "Bluetooth paired" indication (218) indicates that a Bluetooth communication between the instrument cluster (200) and a user mobile communication device such as a mobile phone or tablet PC is in a paired state.

A "lap trip distance" indication (219) is provided for the user to measure a specific trip distance in kilometres or miles as selected using the mode button (207) and set button (208). Two different trips' ("Trip A" and "Trip B") distances can be measured separately as distinguished using indications (220) and (221). A "trip F" indication (222) automatically measures the distance covered by the vehicle while the fuel level is below a reserve condition. This helps the rider to easily gauge the distance he/she can continue riding before refueling a fuel tank of the vehicle. A "distance to empty" indication can estimate a distance that can be covered with the fuel quantity available in the fuel tank. But the estimate might not be accurate due to varying riding conditions, varying road conditions, riding pattern and environmental conditions. The "trip F" indication (222) provides distance covered with fuel level below a reserve condition which the rider can use to estimate the distance he/she can ride before refueling the fuel tank. The rider can thus plan refueling more effectively.

An odometer or lap timer indication (223) is provided in different instrument cluster operating modes to indicate the cumulative distance covered by the vehicle and/or measure the time elapsed to traverse a lap. The lap timer will automatically start if the vehicle speed increases beyond a predetermined threshold (e.g., 2kmph) and it shall automatically stop if the vehicle speed decreases below a predetermined threshold (e.g., 2kmph). The odometer and lap timer indications (223) are multiplexed such that different operating modes selected using mode button (207) and set button (208) switches will display either the odometer or lap timer in the same position.

Clock or average speed (224) during the lap (224) are multiplexed in different operating modes to indicate the geographical time or average lap speed in different operating modes based on mode button (207) and set button (208) selection by the rider. Time taken to accelerate from zero to a predetermined vehicle speed (e.g., 60 kmph) is also indicated (225). This acceleration time indication (225) is multiplexed with "distance to empty" indication in a different operating mode. Fuel level indication (226) with fuel level indication icon (227) is a bar type indication which along with the engine oil temperature indication (210) provides an aesthetic staircase type display.

Mobile communication device (433) status information and navigation instructions are provided in the display space between the engine oil temperature indication (210) and fuel level indication (226). Mobile communication device (433) battery SOC indication (228), signal strength indication (229), SMS notification indication (230) and phone call notification indication (231) are provided to allow the rider to concentrate on vehicle (100) riding without having to use the mobile communication device (433). The phone caller identification is also provided in alphanumeric display (232) so that the rider can decide to park the vehicle (100) and attend the call if he/she thinks that it is from an important or emergency caller.

Navigation instructions are multiplexed along with the caller identification and upon sensing an incoming call while navigation instructions are displayed, the caller identification will be displayed for a predetermined duration before switching back to the navigation instructions display. A navigation mode icon (234) is provided to indicate that navigation instructions are being communicated from the mobile communication device (433) to the instrument cluster (200). The alphanumeric display (232) is also used to indicate alert messages and operating mode details. When the vehicle (100) speed exceeds a predetermined threshold, "high speed alert" will be blinking in the alphanumeric display (232) which reminds the rider to slow down. Alert messages such as "low fuel level" and "low battery level" will also be displayed in the alphanumeric display (232). Operating mode details such as "Street Mode", "Sport Mode", etc., will also be displayed in the alphanumeric display (232). Courtesy messages such as "Good Morning (name of the rider)", "Welcome (name of the rider)" will also be displayed in the alphanumeric display (232).

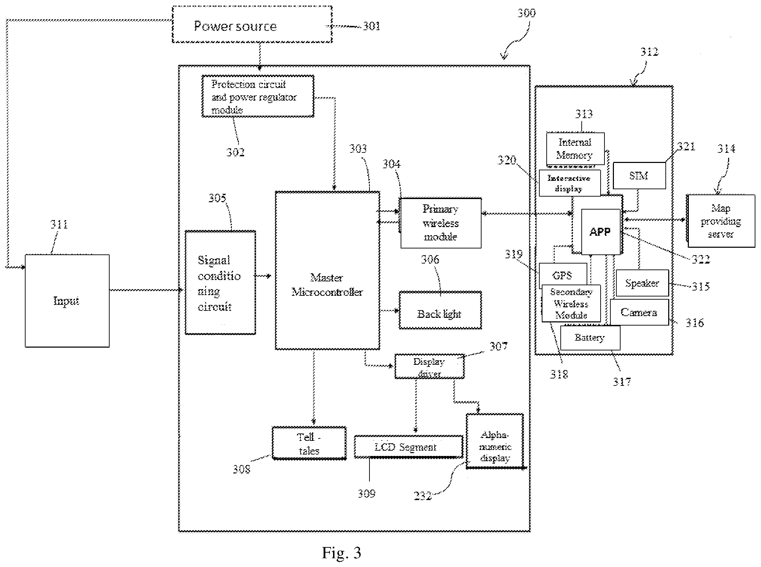

**Fig. 3** illustrates architecture of the present subject matter and the interface among instrument cluster (200), communication device (312) and online map database. The instrument cluster architecture (300) interfaces with the communication device (312) and the communication device (312) interacts with the map provider server (314). The map provider server (314) is a database which provides updated navigation routes on a map.

The instrument cluster architecture (300) comprises of a master microcontroller (303) which governs the function of the instrument cluster (200). The master microcontroller (303) also decides on the alerts and notification to be displayed on the alphanumeric display (232) segment of the display screen (201) of the instrument cluster (200). The master microcontroller (303) is connected to a primary wireless module (304) though bidirectional data bus in order to transfer and receive data via primary wireless module (304) to/from memory of an external device (communication device (312)). The master microcontroller (303) controls the function of the instrument cluster (200) and the primary wireless module (304) eliminates extra requirement of the controller (hardware) dedicated for the primary wireless module (304). As per an embodiment, the primary wireless module (304) is a Bluetooth@ module in instrument cluster (200) and the secondary wireless is a Bluetooth@ module embedded in communication device (312).

Further the master microcontroller (303) receives filtered signals from a signal conditioning circuit (305). The signal conditioning circuit (305) comprises of several sub signal conditioners which receives signals (mostly analog) from the control switches and the sensors installed at various locations in the vehicle (100) which further, after processing, gets displayed in digital format on the display screen (201) of the instrument cluster (200).

The signal conditioning circuit (305) comprises mainly two stages namely- filtering and amplification. In the first stage, which is filtering; filters eliminate the undesirable signal (noise) from the signal received from one or more sensors installed on the vehicle (100) or the control switches to receive the input from the user of the vehicle (100). For eliminating such undesirable noise different types of filters are used depending on the factor like frequency.

After the undesirable signals are filtered out from the incoming signals from one or more input, the filtered signals are amplified to increase the resolution as well as to increase the signal-to-noise ratio as the signal received from the sensor are of very low voltage which is not sufficiently strong enough for further processing i.e., converting the received analog signal from various input into digital signal in order to display the vehicle (100) parameters on the instrument cluster (200) for the user.

The signal conditioning circuit (305) receives signals from different inputs sources (311) like control switches, speed sensor, engine oil sensor, TCI power signal etc. The received signals from one or more inputs sources (311) goes to the signal conditioning circuit (305) where each of the input sources (311) signals after conditioning gets transferred to the master microcontroller (303).

A power source (301) such as a battery provides current to the instrument cluster (200). The power source (301) is connected to a power regulator module (302) to step down the incoming high voltage from the power source (301) and outputs low voltage (~5V) to the master microcontroller (303). Similarly, power source (301) provides power to other low load circuits like control switches, sensors etc.

An interface is created between the instrument cluster architecture (300) and the communication device (312) by pairing the primary wireless module (304) provided in the instrument cluster (200) with the secondary wireless (318) module provided in the communication device (312).

The communication device (312) is provided with interactive display (320) for displaying the output as well as for enabling interaction of the user with the communication device (312). The interactive display (320) of the communication device (312) works as both as an input source and also as an output source. The output can be an alert, a notification or any data.

The communication device (312) is provided with other input sources like a camera (316) and at least one output sources like a speaker (315). The communication device (316) is also provided with an internal memory (313) which stores all type of data including text, video, images, sound etc. A provision is given for one or more SIM or subscriber identity module (321) in the communication device (312).

The communication device (312) is configured with a dedicated customized application (or APP) (322). The customized application (322) interacts with the instrument cluster (200) through Bluetooth ^{®} wireless communication. The customized application (322) sends and receives the information from the instrument cluster (200) which can be stored in the internal memory (313) of the communication device (312) and also can be shared with other people.

The instrument cluster (200) and the communication device (312) is configured to be based on master-slave relationship where master is device which sends the instruction signal or request signal and the slave accepts the instructions signal and the request signal from the master. Master is responsible for decision making process whereas the slave is responsible to take the instruction from the master. When the master microcontroller (303) sends instructions to the communication device (312) then the master microcontroller (303) of the instrument cluster (200) is configured to function as a master system and the communication device (312) functions as a slave system. But when the communication device (312), after getting paired with the instrument cluster (200), sends instructions to the master microcontroller (303) of the instrument cluster (200) from secondary wireless module (318) to the primary wireless module (304) then the communication device (312) is configured to function as a master system and the master microcontroller (303) of the instrument cluster (200) functions as a slave system.

When the vehicle (100) is switched ON, a self-check process of the instrument cluster (200) is initiated and the master microcontroller (303) of the instrument cluster (200) enables the primary wireless module (304) when the mode button (207) is used to set Bluetooth@ mode ON. The user selects the device name of the instrument cluster (200) in the customized application (322) stored in the communication device (312) for the purpose of pairing the secondary wireless module (318) with the primary wireless module (304) of the instrument cluster (200). After selecting the device name of the instrument cluster (200) in the customized application (322), the system is configured to have a unique key is entered in the customized application (322) stored in the communication device (312) though interactive display (320) in order to detect / identify, authenticate & then connect with the instrument cluster (200). The unique key is provided by the manufacturer and every vehicle (100) may have one or more unique keys where each unique key connects only one communication device (312) with the instrument cluster (200). To connect the pair of the instrument cluster (200) with the communication device (312), the mode button (207) is used to set the instrument cluster (200) in Bluetooth@ mode which prevents any unauthorized user to access the instrument cluster (200) by using the unique key.

When the pairing process is initiated by the master microcontroller (303) embedded inside the instrument cluster (200), the master microcontroller (303) enables the primary wireless module (304). The user enables the secondary wireless module (318). The secondary wireless module (318) is configured to scan for any available Bluetooth@ enabled device in the vicinity. After scanning, the user, selects the primary wireless module (304) of the instrument cluster (200) from the list showing the names of the enabled Bluetooth@ devices in the vicinity of the secondary Bluetooth@ module (318) embedded in the communication device (312). A unique key is given by the user to in order to connect the primary wireless module (304) with the secondary wireless module (318).

When the master microcontroller (303) sends out the outputs like data, parameters, alerts or notifications in order to display the output on one or more output sources, during that time the master microcontroller (303) functions as a master system. Also, the master microcontroller (303) does the decision process for selecting and prioritizing the notification and alerts which are to be displayed on the instrument cluster (200). The primary wireless module (318) as well as the communication device (312) works as a slave system by accepting the requests from the master microcontroller (303) and storing the data in the internal memory (313) of the communication device (312).

Whereas the master-slave role is configured to reverse roles when the communication device (312) instructs the master microcontroller (303) and the instrument cluster (200) to display the contents of the communication device (312). The customized application (322) enables the communication device (312) to function as a master and the instrument cluster (200) as a slave. Alerts like incoming call; incoming SMS (short message service), number of missed calls, navigation assist instructions, over speeding alert etc. are sent from the communication device (312) to the instrument cluster (200). The master microcontroller (303) works as a slave as it takes the instructions from the communication device (312).

Further, the communication device (312) connects with map providing sever (314) where the communication device (312) requests for a destination or a location and the map providing server (314) generates the result on the basis of present location of the vehicle (100). The map details along with the directions, time, distance gets displayed on the communication device (312). The communication device (312) sends the direction and distance details to the instrument cluster (200) via secondary wireless module (318) to the primary wireless module (304) and the master microcontroller (303) accepts the data and stores the navigation details in the internal memory (not shown) of the instrument cluster (200). The communication device (312) keeps on streaming the navigation data to the master microcontroller (303) of the instrument cluster (200). The master microcontroller (303) is configured to work as a slave and accepts the data transferred from the communication device (312) which is acting as a master.

The rider can search for a location by entering the name of the place in the search box given in the customized application (322). The customized application (322) displays the current location of the user and the destination location.

Once the user (or the rider) starts the navigation and starts driving the vehicle (100), the instrument cluster (200) shows turn by turn navigation instruction. The navigation instructions are shown in alphanumeric format in the alphanumeric display (232). There are multiple alphanumeric displays (232) and one of the alphanumeric display (232) displays distance remaining in numeric format and other alphanumeric display (232) displays the direction in the alphabet format. To display the navigation related notifications, the instrument cluster (200) requires only a limited part of the screen so that other parameters, indication or notifications can be displayed on the instrument cluster (200). Likewise, the alphanumeric display (232) displays several types of instructions depending on the situation and to guide the rider of the vehicle (100). Notifications like turn left, turn right, sharp turns, destination reached, highway, junction, fork etc., in order to assist the rider in navigation.

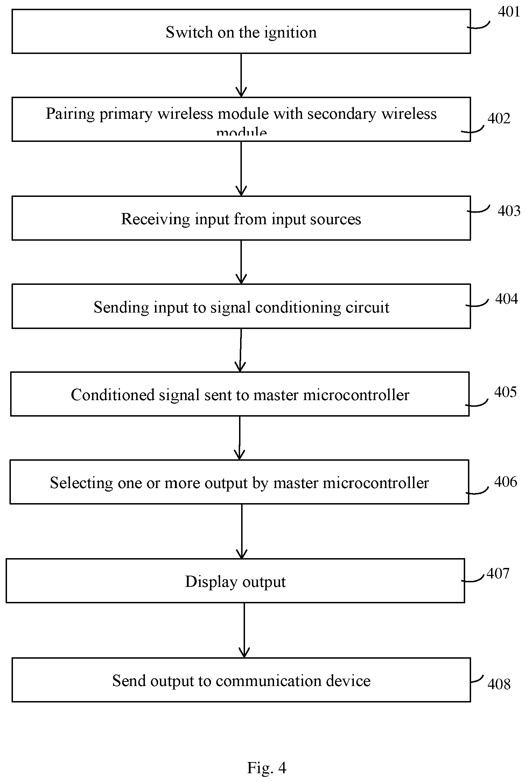

**Fig. 4** shows the flow chart of the method of communicating when the master microcontroller (303) functions as a master system and the rest of the devices including the communication device working as slave system. In step 401, the vehicle (100) is started by switching ON the ignition key or by powering from other power source like a battery. Then after the self-check process of the instrument cluster (200) gets over, in step 402, the primary wireless module (304) pairs with the secondary wireless module (318) by setting the instrument cluster (200) in a wireless mode e.g. a Bluetooth@ mode. After the connection is established between the instrument cluster (200) and the communication device (312) then in step 403, the signal conditioning circuit (305) of the instrument cluster (200) receives input from one or more input sources (311) like signal from control switches, speed sensor input, TCI power signal, engine fuel level, engine temperature and also input from the interactive display (320), used as both input source as well as output source, of the communication device (312). And alerts and notification for missed call, SMS alert (230), navigation data, and battery status (228) of the communication device (312), signal strength of the SIM embedded inside the communication device (312) are transmitted to the master microcontroller through secondary wireless module and primary wireless module. In step 404, one or more input signals are sent to signal conditioning circuit (305). In the next step, step 405, the signals received from the signal conditioning circuit (305) are filtered to remove the noise and undesirable signals and then the required signal is amplified and the signal -to - noise ratio is increased and then the filtered signals are sent to the master microcontroller (303). In step, 406 the microcontroller selects the output and sends the output to one or more output sources. Further in step 407 the output signals get displayed on the corresponding output sources like a plurality of tell-tales (308), a segment display (309), an alphanumeric display (232), backlight (306) of the instrument cluster (200), interactive display (320) of the communication device (312), speaker (315). In step 408, some of the outputs are also sent to the communication device (312) by the master microcontroller (303) to get displayed on the interactive display (320) and also to store that data in the communication device (312) and to share the output data on internet or local network.

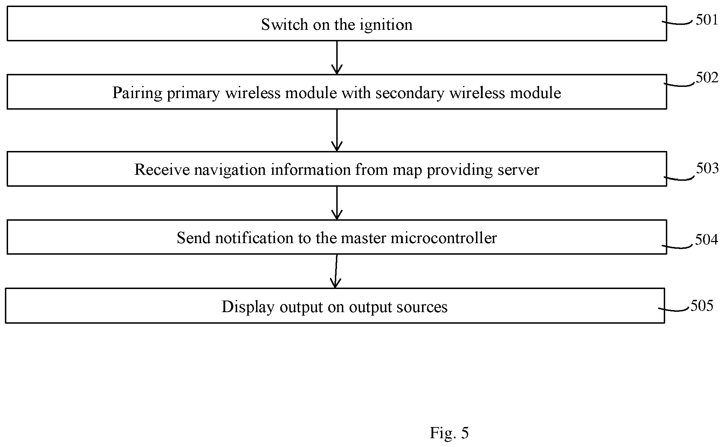

**Fig. 5** displays the flow chart method when the master microcontroller (303) is configured to function as slave system whereas the communication device (312) functions as a master system. In step 501, the vehicle (100) is started by switching the ignition ON or by powering through power source like battery. The instrument cluster (200) does self-check and then in step 502, the primary wireless module pairs (304) with the secondary wireless module (318) by first setting the wireless communication mode e.g. a Bluetooth ^{®} mode ON. In step 503, the communication device is connected with a map providing server (314) for providing navigation instructions to the communication device (312) based on current location identified by GPS (Global Positioning System) in the communication device (312). The destination address or destination location is entered using the interactive display (320) of the communication device (312). The navigation information is received from the map providing server (314). The navigation information is then sent to the master microcontroller (303) which accepts the information in step 504. In step 505, the navigation information gets displayed on one of the output source like alphanumeric display (232), tell-tale (308), and display screen (201) of the instrument cluster (200).

The customized application (322) is capable of providing detailed navigation information like the different types of turns after specified distance, direction in which vehicle (100) needs to take exit routes etc.

In certain cases, the vehicle (100) may be parked in a new location or a crowded location. So, just before the vehicle (100) ignition is turned OFF, the customized application (322) stored in the communication device (312) paired to the instrument cluster (200) via Bluetooth@ modules, saves and stores the location of parking or the location of the vehicle (100). This location of the vehicle (100) helps the user locate his/her vehicle in the crowded place or a new parking area or if the user forgets the location.

In such a scenario, the customized application (322) displays the direction to reach the place where the last location of the vehicle (100) was saved in the communication device (312).

Arrows provided in the top right corner of each figure depicts direction with respect to the two-wheeled vehicle (100), wherein an arrow **F** denotes front direction, an arrow **R** indicated Rear direction, **T** denotes top and **D** denotes down direction as and where applicable. Improvements and modifications may be incorporated herein without deviating from the scope of the invention

Many modifications and variations of the present subject matter are possible in the light of above disclosure. Therefore, within the scope of claims of the present subject matter, the present disclosure may be practiced other than as specifically described.

## Claims

1. An instrument cluster (200) for a vehicle, said instrument cluster (200) comprising:
a master microcontroller (303), said master microcontroller (303) being powered by a power source (301), said power source (301) being regulated by a power regulator module (302);
one or more input sources (311,320), said one or more input sources (311,320) being electrically configured to provide one or more inputs to said master microcontroller (303) through a signal conditioning circuit (305); and
one or more output sources (315,320, 308, 309, 232, 306), said one or more output sources (315,320, 308, 309, 232, 306) being configured to receive one or more outputs from said master microcontroller (303);
wherein,
said master microcontroller (303) being configured to communicate with at least two wireless modules;
wherein,
said at least two wireless modules being a primary wireless module (304) and a secondary wireless module (318),
said primary wireless module (304) being communicatively connected to said master microcontroller (303), and said secondary wireless module (318), and
wherein, said secondary wireless module (318) being provided in a communication device, said secondary wireless module (318) being configured to provide one or more inputs to said primary wireless module (304) from said communication device (312),
wherein,
said master microcontroller (303) being configured to display said one or more inputs, said one or more inputs being received from one of said one or more input sources (311,320) and said secondary wireless module (318), said one or more inputs being displayed on said one or more output sources (315,320, 308, 309, 232, 306),
said master microcontroller (303) being configured to display said one or more inputs based on a predetermined priority table.

2. The instrument cluster (200) as claimed in claim 1, wherein said master microcontroller (303) being configured to send said one or more inputs received from said one or more input sources (311,320) to said secondary wireless module (318) through said primary module (304), said secondary wireless module (318) being configured to display said one or more inputs on said communication device (312).

3. The instrument cluster (200) as claimed in claim 1, wherein said primary wireless module (304) being communicatively connected to said master microcontroller (303) through a bidirectional data bus.

4. The instrument cluster (200) as claimed in claim 1, wherein said primary wireless module (304) establishes connection with said communication device (312) through said secondary wireless module (318).

5. The instrument cluster (200) as claimed in claim 1, wherein said communication device (312) being one or more of a mobile phone and tablet PC.

6. The instrument cluster (200) as claimed in claim 1, wherein said one or more input sources being control switches, a speed sensor, a TCI sensor, a fuel sensor, a mode button (207), an odometer or an interactive display (320).

7. The instrument cluster (200) as claimed in claim 1, wherein said one or more output sources being one of a plurality of tell-tales (308), an LCD segment (309), an alpha numeric display (232) and an interactive display (320).

8. A method for authenticating an instrument cluster (200) of a vehicle (100), said method comprising:
initiating pairing by a master microcontroller (303), said master microcontroller (303) being embedded inside said instrument cluster (200), with at least one communication device (312);
enabling, a primary wireless module (304), by said master microcontroller (303);
enabling, a secondary wireless module (318), by a user of said vehicle (100);
scanning, by said secondary wireless module (318), for checking available Bluetooth enabled devices in vicinity of said secondary wireless module (318);
assigning, at least one unique key, for connecting said primary wireless module (304) with said secondary wireless module (318); and
sending output to one or more output sources including said communication device (312), when said master microcontroller (303) being configured to interchangeably function as a master system, or
instructing said master microcontroller (303) and said instrument cluster (200) to display one or more inputs of said communication device (312), displaying of said one or more inputs by said communication device (312) when said master microcontroller (303) being configured to interchangeably function as a slave system.

9. The method for authenticating an instrument cluster (200) of a vehicle (100) according to claim 8, said method further for interacting an instrumental cluster (200) with a communication device (312), said method 2. further comprising:
switching an ignition key ON;
pairing a primary wireless module (304) with said secondary wireless module (318);
receiving input from one or more input sources;
sending input from said one or more input sources to a signal conditioning circuit (305);
sending one or more signal from said signal conditioning circuit (305) to said master microcontroller (303);
selecting one or more output by said master microcontroller (303);
displaying said one or more output on one or more output sources; and
sending said output to said communication device (312).

10. The method authenticating an instrument cluster (200) of a vehicle (100) as claimed in claim 8, said method further for interacting an instrument cluster (200) with a map providing server (314further comprising:
switching an ignition key ON;
pairing said primary wireless module (304) with said secondary wireless module (318);
receiving navigation information from said map providing server (314) to a customized application (322);
sending navigation information to said master microcontroller (303) through said secondary wireless module (318), said secondary wireless module (318) being provided in said communication device (312);
sending one or more output from said communication device (312) to said master microcontroller (303) through said secondary wireless module (318); and
displaying said one or more output on said one or more output sources (315,320, 308, 309, 232, 306).

11. The method for interacting of an instrumental cluster (200) with a map providing server (314) claimed in claim 10, wherein said customized application (322) being stored in said communication device (312).

## Patentansprüche

1. Kombiinstrument (200) für ein Fahrzeug, wobei das Kombiinstrument (200) umfassend:
einen Master-Mikrocontroller (303), wobei der Master-Mikrocontroller (303)
von einer Stromquelle (301) gespeist wird, wobei die Stromquelle (301) durch ein Stromreglermodul (302) geregelt wird;
eine oder mehrere Eingangsquellen (311, 320), wobei die eine oder mehreren Eingangsquellen (311, 320) elektrisch so konfiguriert sind, dass sie dem Master-Mikrocontroller (303) über eine Signalaufbereitungsschaltung (305) einen oder mehrere Eingänge bereitstellen;
und
eine oder mehrere Ausgangsquellen (315, 320, 308, 309, 232, 306), wobei die eine oder mehreren Ausgangsquellen (315, 320, 308, 309, 232, 306) so konfiguriert sind, dass sie einen oder mehrere Ausgänge von dem Master-Mikrocontroller (303) empfangen;
wobei,
der Master-Mikrocontroller (303) so konfiguriert ist, dass er mit mindestens zwei drahtlosen Modulen kommuniziert;
wobei,
die mindestens zwei drahtlosen Module ein primäres drahtloses Modul (304) und ein sekundäres drahtloses Modul (318) sind
wobei das primäre drahtlose Modul (304) kommunikativ mit dem Master-Mikrocontroller (303) und dem sekundären drahtlosen Modul (318) verbunden ist, und
das sekundäre drahtlose Modul (318) in einer Kommunikationsvorrichtung vorgesehen ist, wobei das sekundäre drahtlose Modul (318) so konfiguriert ist, dass es dem primären drahtlosen Modul (304) einen oder mehrere Eingänge von der Kommunikationsvorrichtung (312) bereitstellt,
wobei,
der Master-Mikrocontroller (303) so konfiguriert ist, dass er den einen oder die mehreren Eingänge anzeigt, wobei der eine oder die mehreren Eingänge von einer der einen oder mehreren Eingangsquellen (311, 320) und dem sekundären drahtlosen Modul (318) empfangen werden, wobei der eine oder die mehreren Eingänge auf der einen oder den mehreren Ausgangsquellen (315, 320, 308, 309, 232, 306) angezeigt werden,
wobei der Master-Mikrocontroller (303) so konfiguriert ist, dass er den einen oder die mehreren Eingänge auf der Grundlage einer vorgegebenen Prioritätstabelle anzeigt.

2. Kombiinstrument (200) nach Anspruch 1, wobei der Master-Mikrocontroller (303) so konfiguriert ist, dass er die eine oder die mehreren von der einen oder den mehreren Eingangsquellen (311, 320) empfangenen Eingaben über das primäre Modul (304) an das sekundäre drahtlose Modul (318) sendet, wobei das sekundäre drahtlose Modul (318) so konfiguriert ist, dass es die eine oder die mehreren Eingaben auf der Kommunikationsvorrichtung (312) anzeigt.

3. Kombiinstrument (200) nach Anspruch 1, wobei das primäre drahtlose Modul (304) über einen bidirektionalen Datenbus mit dem Master-Mikrocontroller (303) kommunikativ verbunden ist.

4. Kombiinstrument (200) nach Anspruch 1, wobei das primäre drahtlose Modul (304) über das sekundäre drahtlose Modul (318) eine Verbindung mit der Kommunikationsvorrichtung (312) herstellt.

5. Kombiinstrument (200) nach Anspruch 1, wobei das Kommunikationsgerät (312) ein oder mehrere Mobiltelefone und Tablet-PCs sind.

6. Kombiinstrument (200) nach Anspruch 1, wobei es sich bei der einen oder den mehreren Eingangsquellen um Steuerschalter, einen Geschwindigkeitssensor, einen TCI-Sensor, einen Kraftstoffsensor, eine Modus-Taste (207), einen Kilometerzähler oder eine interaktive Anzeige (320) handelt.

7. Kombiinstrument (200) nach Anspruch 1, wobei die eine oder mehrere Ausgabequellen eine von mehreren Kontrollleuchten (308), ein LCD-Segment (309), eine alphanumerische Anzeige (232) und eine interaktive Anzeige (320) ist.

8. Verfahren zur Authentifizierung eines Kombiinstruments (200) eines Fahrzeugs (100),
wobei das Verfahren umfasst:
Einleiten der Kopplung durch einen Master-Mikrocontroller (303), wobei der Master-Mikrocontroller (303) in das Kombiinstrument (200) eingebettet ist,
mit mindestens einem Kommunikationsgerät (312);
Freigabe eines primären drahtlosen Moduls (304) durch den Master-Mikrocontroller (303);
Freigabe eines sekundären drahtlosen Moduls (318) durch einen Benutzer des Fahrzeugs (100);
Scannen durch das sekundäre drahtlose Modul (318), um verfügbare Bluetooth-fähige Geräte in der Nähe des sekundären drahtlosen Moduls (318) zu überprüfen;
Zuweisen mindestens eines eindeutigen Schlüssels, um das primäre drahtlose Modul (304) mit dem sekundären drahtlosen Modul (318) zu verbinden; und
Senden einer Ausgabe an eine oder mehrere Ausgabequellen, einschließlich der Kommunikationsvorrichtung (312), wenn der Master-Mikrocontroller (303) so konfiguriert ist, dass er austauschbar als ein Mastersystem fungiert, oder
Anweisen des Master-Mikrocontrollers (303) und des Kombiinstruments (200), eine oder mehrere Eingaben der Kommunikationsvorrichtung (312) anzuzeigen (312) anzuzeigen, wobei die Anzeige des einen oder der mehreren Eingänge durch die Kommunikationsvorrichtung (312) erfolgt, wenn der Master-Mikrocontroller (303) so konfiguriert ist, dass er austauschbar als ein Slave-System funktioniert.

9. Verfahren zur Authentifizierung eines Kombiinstruments (200) eines Fahrzeugs (100) nach Anspruch 8, wobei das Verfahren ferner die Interaktion eines Kombiinstruments (200) mit einem Kommunikationsgerät (312), wobei das Verfahren ferner umfasst:
das Einschalten eines Zündschlüssels;
Koppeln eines primären drahtlosen Moduls (304) mit dem sekundären drahtlosen Modul (318); Empfangen einer Eingabe von einer oder mehreren Eingabequellen;
Senden von Eingaben von der einen oder den mehreren Eingangsquellen an eine Signalaufbereitungsschaltung (305);
Senden eines oder mehrerer Signale von der Signalkonditionierungsschaltung (305) an den Master-Mikrocontroller (303);
Auswählen eines oder mehrerer Ausgangssignale durch den Master-Mikrocontroller (303);
Anzeigen des einen oder der mehreren Ausgänge auf einer oder mehreren Ausgangsquellen; und
Senden der Ausgabe an die Kommunikationsvorrichtung (312).

10. Verfahren zur Authentifizierung eines Kombiinstruments (200) eines Fahrzeugs (100) nach nach Anspruch 8, wobei das Verfahren ferner zur Interaktion eines Kombiinstruments (200) mit einem Kartenbereitstellungsserver (314) Folgendes umfasst:
Einschalten eines Zündschlüssels;
Koppeln des primären drahtlosen Moduls (304) mit dem sekundären drahtlosen Modul (318);
Empfangen von Navigationsinformationen von dem Kartenbereitstellungsserver (314) an eine kundenspezifische Anwendung (322);
Senden von Navigationsinformationen an den Master-Mikrocontroller (303) durch das sekundäre drahtlose Modul (318), wobei das sekundäre drahtlose Modul (318) in der Kommunikationsvorrichtung (312) vorgesehen ist;
Senden einer oder mehrerer Ausgaben von der Kommunikationsvorrichtung (312) an den Hauptmikrocontroller (303) durch das sekundäre drahtlose Modul (318); und
Anzeigen der einen oder mehreren Ausgaben auf der einen oder mehreren Ausgabe Quellen (315, 320, 308, 309, 232, 306).

11. Verfahren zur Interaktion eines Instrumentenclusters (200) mit einem
Kartenbereitstellungsserver (314) nach Anspruch 10, wobei die kundenspezifische Anwendung (322) in der Kommunikationsvorrichtung (312) gespeichert ist.

## Revendications

1. Groupe d'instruments (200) pour un véhicule, ledit groupe d'instruments (200) comprend :
un microcontrôleur principal (303), ledit microcontrôleur principal (303)
est alimenté par une source d'énergie (301), ladite source d'énergie (301) étant régulée par un module régulateur de puissance (302) ;
une ou plusieurs sources d'entrée (311,320), ladite ou plusieurs sources d'entrée (311,320) étant électriquement configurées pour fournir une ou plusieurs entrées audit microcontrôleur maître (303) par l'intermédiaire d'un circuit de conditionnement de signal (305) ;
et
une ou plusieurs sources de sortie (315,320, 308, 309, 232, 306), ladite ou plusieurs sources de sortie (315,320, 308, 309, 232, 306) étant configurées pour recevoir une ou plusieurs sorties dudit microcontrôleur maître (303) ;
dans lequel,
ledit microcontrôleur maître (303) étant configuré pour communiquer avec au moins deux modules sans fil ;
dans lequel,
lesdits au moins deux modules sans fil étant un module sans fil primaire (304) et un module sans fil secondaire (318),
ledit module sans fil primaire (304) étant connecté de manière communicative audit microcontrôleur maître (303) et audit module sans fil secondaire (318), et
dans un dispositif de communication, ledit module sans fil secondaire (318) étant configuré pour fournir une ou plusieurs entrées audit module sans fil primaire (304) à partir dudit dispositif de communication (312),
dans lequel,
ledit microcontrôleur principal (303) étant configuré pour afficher lesdites une ou plusieurs entrées, lesdites une ou plusieurs entrées étant reçues de l'une desdites une ou plusieurs sources d'entrée (311, 320) et dudit module sans fil secondaire (318), lesdites une ou plusieurs entrées étant affichées sur lesdites une ou plusieurs sources de sortie (315, 320, 308, 309, 232, 306),
ledit microcontrôleur principal (303) étant configuré pour afficher lesdites une ou plusieurs entrées sur la base d'un tableau de priorité prédéterminé. sur la base d'un tableau de priorité prédéterminé.

2. Groupe d'instruments (200) selon la revendication 1, dans lequel ledit microcontrôleur maître (303) est configuré pour envoyer ladite ou plusieurs entrées reçues de ladite ou plusieurs sources d'entrée (311, 320) audit module sans fil secondaire (318) par l'intermédiaire dudit module primaire (304), ledit module sans fil secondaire (318) étant configuré pour afficher ladite ou plusieurs entrées sur la base d'un tableau de priorité prédéterminé
module sans fil secondaire (318) étant configuré pour afficher lesdites une ou plusieurs entrées sur ledit dispositif de communication (312).

3. Groupe d'instruments (200) selon la revendication 1, dans lequel ledit module sans fil primaire (304) est connecté de manière communicative audit microcontrôleur maître (303) par l'intermédiaire d'un bus de données bidirectionnel.

4. Groupe d'instruments (200) selon la revendication 1, dans lequel ledit module sans fil primaire (304) établit une connexion avec ledit dispositif de communication (312) par l'intermédiaire dudit module sans fil secondaire (318).

5. Groupe d'instruments (200) selon la revendication 1, dans lequel ledit dispositif de communication (312) est un ou plusieurs téléphones mobiles et tablettes PC.

6. Groupe d'instruments (200) selon la revendication 1, dans lequel une ou plusieurs sources d'entrée sont des commutateurs de commande, un capteur de vitesse, un capteur TCI, un capteur de carburant, un bouton de mode (207), un compteur kilométrique ou un écran interactif (320).

7. Groupe d'instruments (200) selon la revendication 1, dans lequel une ou plusieurs sources de sortie sont une pluralité de témoins (308), un segment LCD (309), un affichage alphanumérique (232) et un affichage interactif (320).

8. Méthode d'authentification d'un combiné d'instruments (200) d'un véhicule (100),
Cette méthode consiste à
initier l'appairage par un microcontrôleur maître (303), ledit microcontrôleur maître (303) étant initier dans ledit combiné d'instruments (200),
avec au moins un dispositif de communication (312) ;
Activation d'un module sans fil primaire (304) par ledit microcontrôleur maître (303) ;
activation d'un module sans fil secondaire (318) par un utilisateur dudit véhicule (100) ;
le balayage, par ledit module sans fil secondaire (318), pour vérifier les dispositifs compatibles Bluetooth disponibles à proximité dudit module sans fil secondaire (318) ;
l'attribution d'au moins une clé unique pour connecter ledit module sans fil primaire (304) audit module sans fil secondaire (318) ; et
envoyer une sortie à une ou plusieurs sources de sortie, y compris ledit dispositif de communication (312), lorsque ledit microcontrôleur principal (303) est configuré pour fonctionner de manière interchangeable en tant que système principal, ou
en ordonnant audit microcontrôleur principal (303) et audit combiné d'instruments (200) d'afficher une ou plusieurs entrées dudit dispositif de communication (312), l'affichage dudit microcontrôleur principal (303) étant configuré pour fonctionner de manière interchangeable comme système principal, ou
(312), l'affichage de ladite ou desdites entrées par ledit dispositif de communication (312) lorsque ledit microcontrôleur maître (303) est configuré pour fonctionner de manière interchangeable en tant que système esclave.

9. Méthode d'authentification d'un combiné d'instruments (200) d'un véhicule (100) selon la revendication 8, ladite méthode consistant en outre à faire interagir un groupe d'instruments (200) avec un dispositif de communication (312), ladite méthode comprenant en outre
mettre la clé de contact sur ON ;
coupler un module sans fil primaire (304) avec ledit module sans fil secondaire (318);
recevoir des données d'une ou plusieurs sources d'entrée ;
envoyer des données provenant d'une ou plusieurs sources d'entrée à un circuit de à un circuit de conditionnement de signaux (305) ;
envoyer un ou plusieurs signaux de ce circuit de conditionnement de signaux (305) à ce microcontrôleur maître (303) ;
sélection d'une ou plusieurs sorties par ledit microcontrôleur principal (303) ;
affichage de cette ou de ces sorties sur une ou plusieurs sources de sortie ;
et
envoyer ladite sortie au dispositif de communication (312).

10. Méthode d'authentification d'un combiné d'instruments (200) d'un véhicule (100) selon la revendication 8, ladite méthode consistant en outre à faire interagir un combiné d'instruments (200) avec un serveur de fourniture de cartes (314) et comprenant en outre :
mettre la clé de contact sur ON ;
coupler ledit module sans fil primaire (304) avec ledit module sans fil secondaire (318) ;
recevoir des informations de navigation dudit serveur de fourniture de cartes (314) vers une application personnalisée (322) ;
envoyer les informations de navigation au microcontrôleur principal (303) par l'intermédiaire du module sans fil secondaire (318), ce module sans fil secondaire (318) étant intégré à l'appareil de communication (312) ;
envoyer une ou plusieurs sorties dudit dispositif de communication (312) audit microcontrôleur principal (303) par l'intermédiaire dudit module sans fil secondaire (318) ; et
afficher cette ou ces sorties sur une ou plusieurs sources de sortie (315, 320, 308, 309, 232, 306).

11. Méthode d'interaction entre une grappe instrumentale (200) et un serveur de fourniture de cartes (314) selon la revendication 10, dans laquelle ladite application personnalisée (322) est stockée dans ledit dispositif de communication (312).
